# EUROPEAN PATENT SPECIFICATION

(11) **EP 0 621 627 B1**
(45) Date of publication and mention of the grant of the patent: **13.01.1999**
(21) Application number: 94400812.7
(22) Date of filing: 14.04.1994
(51) Int. Cl.: H01J 29/89, H04N 5/65

(54) **Anti-glare screen apparatus**
Blendschutzsschirm
Ecran anti-éblouissant

(30) Priority: 14.04.1993 US 48032
(43) Date of publication of application: 26.10.1994
(73) Proprietor: SOFTVIEW COMPUTER PRODUCTS CORP, New York, New York 10010 (US)
(72) Inventor: King, Robert, New York, New York 10012 (US)
(74) Representative: Joly, Jean-Jacques

(56) References cited:
- EP-A- 0 535 989
- US-A- 3 329 770
- US-A- 4 652 085
- US-A- 4 784 468
- US-A- 5 121 253

## Description

### Background of the Invention

The present invention relates to devices for mounting a frame upon articles of varying sizes. More particularly, the present invention relates to anti-glare and/or anti-static screens which are mountable on or over a video display monitor and corresponding bezel such as that which are a part of a television or computer terminal.

With the widespread use of computer terminals, there is an increasing demand for anti-glare and anti-static devices to reduce either or both the glare and/or static which is reflected off the computer screen. A number of such devices are known in the art. For example, it is known in the art to mount an adhesive strip to the computer monitor and a corresponding adhesive strip to the anti-glare screen frame in order to provide a removable anti-glare screen apparatus. Such a system, however, poses unnecessary complications. For example, it requires that an adhesive material be near permanently mounted to either the computer screen or the surrounding bezel. Moreover, the device is comprised of several components rather than a single unit.

Another drawback of prior art systems is that they fail to eliminate the problems caused by dust and light seepage onto the monitor face negatively affecting the clarity of the image. In its attempt to mold itself to the shapes of various monitor screen and bezel configurations, the above mentioned prior art systems leave gaps between the anti-glare screen and the bezel.

The static electricity generated by the computer screen attracts dust which can enter through these gaps and settle on the monitor screen and on the inside of the anti-glare screen thereby obstructing the user's vision. This requires the user to frequently remove the anti-glare screen in order to clean the dust off the monitor screen, only to repeatedly weaken the adhesion and affecting both the screen's placement in relationship to the monitor screen and its utility.

Another problem caused by the gap between the anti-glare screen and the bezel is slight seepage. Light can enter the gaps between the bezel and the filter screen and reflect back and forth between the monitor and filter screens thereby adding to the glare which reflects off the monitor screen into the eyes of the user.

As a result, there is a need for an apparatus in a single unit which is readily adaptable to monitors of varying sizes, is easily transferable to other monitors of differing sizes, and which eliminates the problem of dust and light seepage.

For an example of a prior art filter device corresponding to the preamble of claim 1, reference may be made to EP-A-0 535 989. In this art, a U-shaped lip that protrudes from the rear edge of a frame portion forms an interface for mounting the device and adapting to different monitor sizes.

A darkroom safelight filter assembly for a TV set is disclosed in US-A-4 652 085. The device has a bracket thereon mounting a block of sponge rubber supported on the top wall of the TV set. The filter assembly depends from the bracket and is provided with a strip of sealing material that forms a snug fit with the TV screen.

### SUMMARY OF THE INVENTION

The present invention provides a universal filter apparatus which is adaptable to computer monitors of varying sizes. The present invention, unlike some prior art devices, does not require the application of any adhesive substances or mounting brackets to the monitor. Furthermore, it can be installed and removed without dismantling the terminal's bezel. The invention can also be installed and removed quickly without the use of any release mechanism. Moreover, it does not require the manipulation of fixation devices such as adhesive strips, rubber lips, or suction devices.

The present invention is defined in claim 1, whilst preferred embodiments are defined in the dependent claims. Depending on the embodiments, the device may include an anti-glare, anti-static or similar filter screen mounted to a front side of a housing. The housing includes the front side, a top side and at least two lateral sides with the at least two lateral sides protruding substantially perpendicularly from the front side. A securing device is attached to the interior face of each of the lateral sides. In accordance with the present invention, the securing device is composed of rubber, foam rubber, sponge rubber, or a similarly elastically deformable material or device which is sufficiently resilient and non-resistant to allow the housing to easily slide over the monitor. The housing can be installed onto a monitor in a bottom first vertical manner or in a back first horizontal manner.

The elastically deformable and resilient nature of the securing device allows the frame to be mounted onto monitors of varying sizes. Moreover, the nonresistant nature of the securing device allows the frame to be mounted to and removed from the monitor with minimal effort.

As previously mentioned, one problem with anti-glare and anti-static screens is that dust can settle on the monitor screen and on the inside of the filter screen thereby degrading the quality of the picture seen by the user. The apparatus according to the present invention solves this problem because each securing device forms a seal between the apparatus and the side of the monitor. If the securing device extends over substantially all of the length of each of the at least two sides, these seals will prevent dust from settling on the monitor screen and on the inside of the filter screen. Furthermore, the seal prevents light from seeping between the monitor screen and the filter screen. This is important because without the seals, light can enter the gap between the filter screen and the monitor screen and bezel, and reflect back and forth between the monitor screen and filter screen thereby adding to the glare which reflects off the monitor screen into the eyes of the user.

### Brief Description of the Drawings

Figure 1 shows a frontal view of the present invention.

Figure 2a shows a rear view of the present invention without the securing devices.

Figure 2b shows a rear view of the present invention with the securing devices and without a filter.

Figure 3 shows a lateral view of the present invention.

Figure 4 illustrates the manner in which the present invention is mounted on a monitor.

Figures 5a and 5b illustrate a further embodiment of the present invention.

### Detailed Description of the Drawings

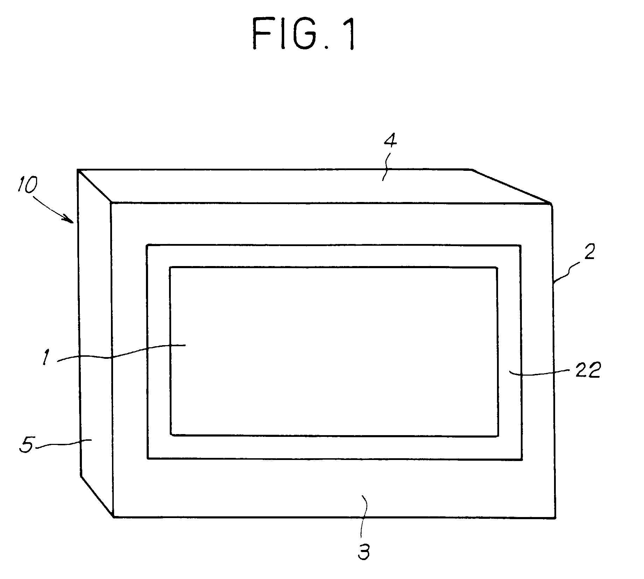

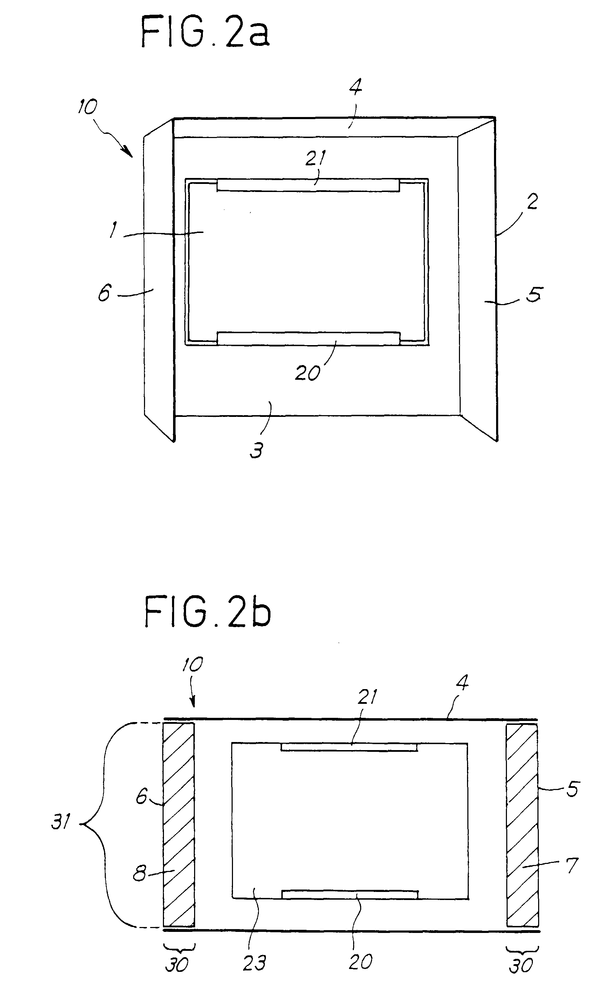

Figures 1 and 2, respectively, show a frontal and rear view of the universal filter apparatus according to the present invention. A housing 2 is shown with a front side 3, lateral sides 5, 6, and a top side 4. A filter 1 is mounted to the front side 3 of the housing 2. The top side 4, and lateral sides 5, 6 each extend perpendicularly from the interior face of the front side 3.

Securing devices 7 and 8 are attached to the interior face of lateral sides 5 and 6 respectively as illustrated in the rear view of the present invention shown in Figure 2b (note: the securing devices 7, 8 are omitted from Figure 2a). The securing devices 7, 8 are composed of foam rubber (e.g. polyester), sponge rubber, or a similar elastically deformable (i.e. resilient) material or device.

The securing devices 7,8 must be sufficiently resilient and nonresistant to allow the housing to slide over the monitor without sticking. The width 30 of the securing devices 7,8, and the elasticity of the material chosen for the securing devices 7,8, dictate the range of monitor sizes which the universal filter apparatus 10 can be adapted to. It should be noted that the width 30 will be limited by the ability of the housing 2 to withstand pressure from a compressed securing device 7,8 without breaking or experiencing significant deformation.

In accordance with an embodiment of the present invention, the housing 2 is comprised of a single piece of molded plastic. The filter 1 can be an anti-glare screen, anti-static screen or similar filter screen. Referring to figures 1-3, the front side 3 of the housing 2 has a raised region 22 with an aperture 23 in which the filter 1 is positioned. The dimensions of the aperture 23 are smaller than the dimensions of the filter 1. The filter 1 is mounted on the interior face of the front side 3 between the raised region 22 and two horizontal lip members 20, 21 which extend from the housing 2 as shown in Figure 2a.

In an illustrative embodiment according to the present invention, the securing devices 7,8 are comprised of polyester foam and the width 30 of the securing devices 7,8 is about 18mm (3/4 inch). Each securing device has a length 31 substantially equal to the length of the lateral sides 5,6. The securing devices 7,8 extend over all or most of the lateral sides 5,6 to form a seal with each side of the monitor 11. This seal, combined with the top side 4 significantly reduces the amount of dust and light which can seep between the universal filter apparatus 10 and the monitor screen.

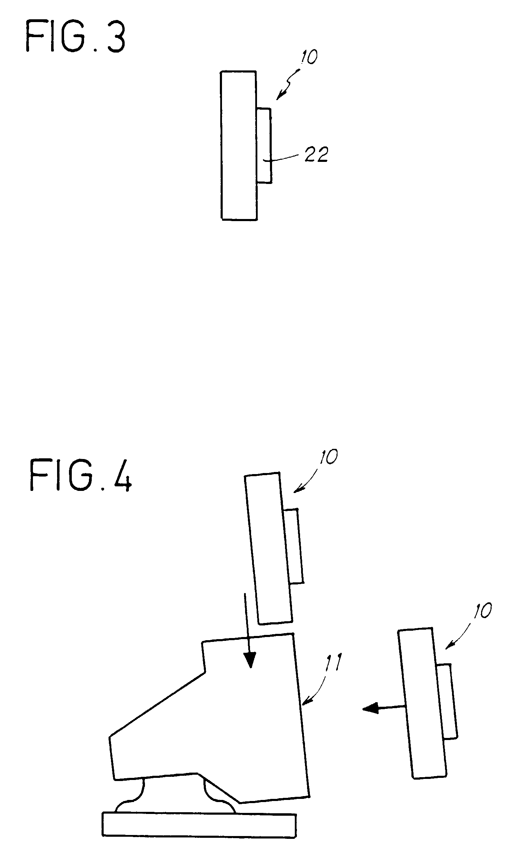

The manner in which the universal filter apparatus 10 of the present invention is mounted onto a monitor 11 will now be discussed. As shown in Figure 4, the apparatus according to the present invention is mounted either bottom first onto the monitor 11 in a vertical fashion or back first onto the monitor 11 in a horizontal fashion. As the apparatus 10 slides over the sides of the monitor 11, the securing devices 7,8 are deformed. Due to the elastically deformable and resilient nature of the securing devices, the compressed securing devices 7, 8 exert pressure upon the monitor 11 and the lateral sides 5, 6 to securely hold the universal filter apparatus 10 in place. Moreover, due to the nonresistant nature of the securing devices, the apparatus can be installed and removed with minimal effort. As explained earlier, the securing devices 7,8 need not be completely non-adhesive or non-resistant. All that is required is that the substance chosen be sufficiently nonresistant to allow installation and removal of the apparatus 10 which is not impeded or hindered by the friction between the securing devices 7,8 and the monitor 11.

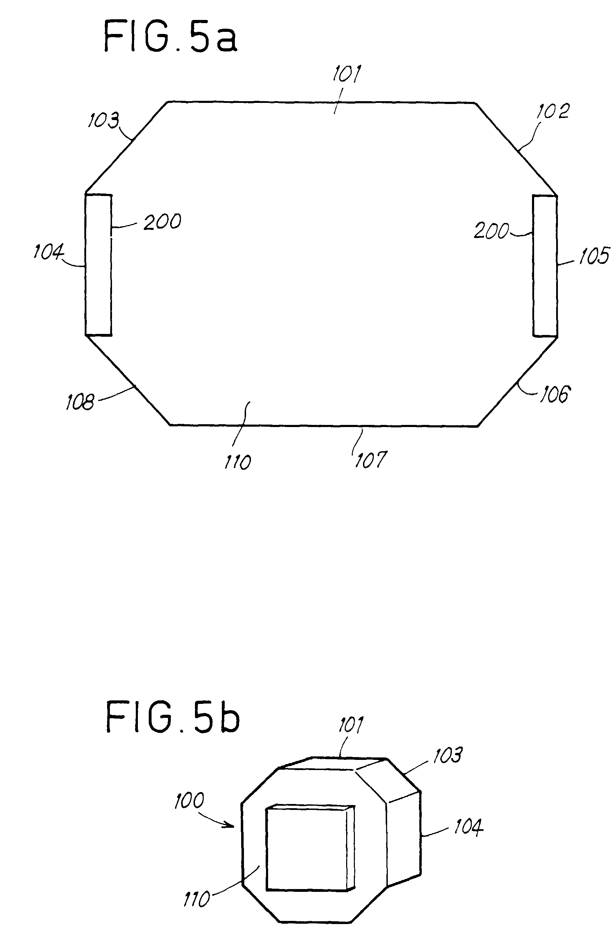

The present invention can also be adapted for use with monitors of varying shapes and dimensions. For a monitor face with n sides, securing devices are provided on at least two lateral sides which reside on opposing ends of the apparatus. Taking as a example a monitor face with eight sides, and referring to Figure 5a, a rear view of an apparatus according to the present invention for use with an octagonal monitor face is shown. A front side 110 is shown with lateral sides 102, 103, 104, 105, 106, 108. In accordance with the present invention, a securing device is provided on the interior face of at least two lateral sides which reside on opposing ends of the apparatus. Thus, a securing device is provided on at least one of sides 103, 104, 108 and on at least one of sides 102, 105, 106. It should be noted that for an n sided monitor, the present invention need only provide three sides: a top side and two lateral sides. Therefore, referring to Figure 5a, the octagonal apparatus 100 could include the following combinations of sides: (101, 104, 105), (101, 102, 103, 104, 105, 106, 108); (101, 102, 103, 104, 105, 106, 107, 108) etc.

In an exemplary embodiment of the present invention illustrated in figure 5b, the octagonal apparatus 100 has a top side 101, and lateral sides 102, 103, 104, 105, each of which extend perpendicularly from the interior face of the front side 110 of the apparatus 100. Securing devices 200 are provided at least on lateral sides 104 and 105. In order to minimize dust and light seepage, however, securing devices 200 should be provided which extend over all or most of the length of each of sides 102, 103, 104, and 105. The octagonal apparatus 100 can be installed and removed from the monitor either in a bottom first, vertical manner or in a back first, horizontal manner.

## Claims

1. A universal filter apparatus (10), comprising :
a) a housing having a front side (3; 110), a top side (4; 101), and at least two lateral sides (5, 6; 102-106, 108), each of the at least two lateral sides extending substantially perpendicularly from the front side and terminating at a rear end portion, each of the top side and at least two lateral sides having an interior face and an exterior face;
(b) a filter screen (1) positioned in the front side of the housing; and
c) elastically deformable non-resistant securing means (7, 8; 200) for securing the housing to a monitor (11), the elastically deformable and non-resistant securing means being attached to each of the at least two lateral sides;
characterized in that said elastically deformable non-resistant securing means (7, 8; 200) are on the interior faces of the at least two lateral sides, between said front side and said rear end portion thereof, so as to be situated between said interior faces and corresponding sides of said monitor (11).

2. The universal filter apparatus of claim 1, wherein each elastically deformable non-resistant securing means (7, 8; 200) is composed of foam rubber.

3. The universal filter apparatus of claim 1, wherein each elastically deformable non-resistant securing means (7, 8; 200) is composed of sponge rubber.

4. The universal filter apparatus of claim 1, wherein each elastically deformable non-resistant securing means (7, 8; 200) is composed of non-adhesive rubber.

5. The universal filter apparatus of claim 1, wherein each elastically deformable non-resistant securing means (7, 8; 200) is composed of polyester foam.

6. The universal filter apparatus of claim 1, wherein each elastically deformable non-resistant securing means (7, 8; 200) covers substantially all of the interior face of a respective one of the at least two lateral sides (5, 6; 102-106, 108).

7. The universal filter apparatus of claim 1, wherein the top side (4; 101) extends substantially perpendicularly from the front side (3; 110) and the at least two lateral sides (5, 6; 102-106, 108) is a left lateral side and a right lateral side, each perpendicularly disposed relative to the top side.

## Patentansprüche

1. Eine Universalfiltervorrichtung (10), aufweisend:
a) ein Gehäuse mit einer Vorderseite (3; 110), einer Oberseite (4; 101) und wenigstens zwei seitlichen Seiten (5, 6; 102-106, 108), wobei sich jede der wenigstens zwei seitlichen Seiten im wesentlichen rechtwinklig von der Vorderseite erstreckt und an einem hinteren Endbereich endet und wobei jede der folgenden Seiten, nämlich die Oberseite und die wenigstens zwei seitlichen Seiten, eine Innenfläche und eine Außenfläche aufweist;
b) einen Filterschirm (1), der an der Vorderseite des Gehäuses positoiniert ist; und
c) elastisch verformbare, nicht-widerstehende Befestigungsmittel (7, 8; 200) zum Befestigen des Gehäuses an einem Monitor (11), wobei die elastisch verformbaren und nichtwiderstehenden Befestigungsmittel an jeder der wenigstens zwei seitlichen Seiten angebracht sind;
dadurch gekennzeichnet, daß die elastisch verformbaren, nichtwiderstehenden Befestigungsmittel (7, 8; 200) an den Innenflächen der wenigstens zwei seitlichen Seiten, zwischen der Vorderseite und dem hinteren Endbereich der wenigstens zwei seitlichen Seiten, vorhanden sind, um zwischen den Innenflächen und entsprechenden Seiten des Monitors (11) angeordnet zu sein.

2. Die Universalfiltervorrichtung nach Anspruch 1, bei welcher jedes elastisch verformbare, nicht-widerstehende Befestigungsmittel (7, 8; 200) aus Schaumgummi besteht.

3. Die Universalfiltervorrichtung nach Anspruch 1, bei welcher jedes elastisch verformbare, nicht-widerstehende Befestigungsmittel (7, 8; 200) aus Schwammgummi besteht.

4. Die Universalfiltervorrichtung nach Anspruch 1, bei welcher jedes elastisch verformbare, nicht-widerstehende Befestigungsmittel (7, 8; 200) aus nicht-anhaftendem Gummi besteht.

5. Die Universalfiltervorrichtung nach Anspruch 1, bei welcher jedes elastisch verformbare, nicht-widerstehende Befestigungsmittel (7, 8; 200) aus Polyesterschaum besteht.

6. Die Universalfiltervorrichtung nach Anspruch 1, bei welcher jedes elastisch verformbare, nicht-widerstehende Befestigungsmittel (7, 8, 200) im wesentlichen die gesamte Innenfläche einer jeweiligen der wenigstens zwei seitlichen Seiten (5, 6; 102-106, 108) bedeckt.

7. Die Universalfiltervorrichtung nach Anspruch 1, bei welcher die Oberseite (4; 101) sich im wesentlichen rechtwinklig von der Vorderseite (3; 110) erstreckt und die wenigstens zwei seitlichen Seiten (5, 6; 102-106, 108) eine linke seitliche Seite und eine rechte seitliche Seite sind, wobei jede rechtwinklig relativ zu der Oberseite angeordnet ist.

## Revendications

1. Appareil de filtrage universel (10), comprenant :
a) un boîtier possédant un côté avant (3; 110), un côté supérieur (4; 101), et au moins deux côtés latéraux (5, 6; 102-106, 108), chacun des deux, ou plus de deux, côtés latéraux s'étendant de façon sensiblement perpendiculaire depuis le côté avant et se terminant en une partie finale arrière, chacun des côtés que forment le côté supérieur et les deux, ou plus de deux, côtés latéraux ayant une face intérieure et une face extérieure ;
b) un écran de filtrage positionné dans le côté avant du boîtier ; et
c) des moyens de fixation non résistants élastiquement déformables (7, 8; 200) servant à fixer le boîtier à un écran de contrôle (11), les moyens de fixation non résistants et élastiquement déformables étant attachés à chacun des deux, ou plus de deux, côtés latéraux ;
caractérisé en ce que lesdits moyens de fixation non résistants élastiquement déformables (7, 8; 200) sont sur les faces intérieures des deux, ou plus de deux, côtés latéraux, entre ledit côté avant et ladite partie finale arrière, de façon à être situés entre lesdites faces intérieures et des côté correspondants dudit écran de contrôle (11).

2. Appareil de filtrage universel selon la revendication 1, où chaque moyen de fixation non résistant élastiquement déformable (7, 8; 200) est constitué de caoutchouc mousse.

3. Appareil de filtrage universel selon la revendication 1, où chaque moyen de fixation non résistant élastiquement déformable (7, 8; 200) est constitué de caoutchouc spongieux.

4. Appareil de filtrage universel selon la revendication 1, où chaque moyen de fixation non résistant élastiquement déformable (7, 8; 200) est constitué de caoutchouc non adhésif.

5. Appareil de filtrage universel selon la revendication 1, où chaque moyen de fixation non résistant élastiquement déformable (7, 8; 200) est constitué de mousse de polyester.

6. Appareil de filtrage universel selon la revendication 1, où chaque moyen de fixation non résistant élastiquement déformable (7, 8; 200) couvre sensiblement toute la face intérieure de l'un, respectif, des deux, ou plus de deux, côtés latéraux (5, 6; 102-106, 108).

7. Appareil de filtrage universel selon la revendication 1, où le côté supérieur (4; 101) s'étend de façon sensiblement perpendiculaire depuis le côté avant (3; 110), et les deux, ou plus de deux, côtés latéraux (5, 6; 102-106, 108) sont un côté latéral gauche et un côté latéral droit, chacun étant perpendiculairement disposé par rapport au côté supérieur.
